# NEUE EUROPÄISCHE PATENTSCHRIFT

(11) **EP 0 358 178 B2**
(45) Veröffentlichungstag und Bekanntmachung des Hinweises auf die Entscheidung über den Einspruch: **23.08.1995**
(45) Hinweis auf die Patenterteilung: 20.05.1992
(21) Anmeldenummer: 89116421.2
(22) Anmeldetag: 06.09.1989
(51) Int. Cl.: F16L 9/12

(54) **Mehrschichtiges Kunststoffrohr und Herstellungsverfahren dafür**
Multilayered plastic pipe and manufacture process therefor
Tuyau multi-couche en matière plastique et procédé de fabrication pour celui-ci

(30) Priorität: 06.09.1988 CH 3345/88
(43) Veröffentlichungstag der Anmeldung: 14.03.1990
(73) Patentinhaber: Symalit AG, CH-5600 Lenzburg (CH)
(72) Erfinder: Wickli, Werner, CH-5702 Niederlenz (CH); Werthmüller, Beat, CH-5742 Kölliken (CH)
(74) Vertreter: Blum, Rudolf Emil Ernst

(56) Entgegenhaltungen:
- EP-A- 0 207 047
- DE-A- 2 542 423
- DE-A- 2 555 017
- DE-A- 3 704 301
- FR-A- 2 334 042
- US-A- 4 037 011
- US-A- 4 115 614
- US-A- 4 238 266
- JAPANES PATENTS GAZETTE, "Section Ch", Woche 8613, 7. Mai 1986, Klasse A, Seite 14, Nr. 86-085463/13, Derwent Publications Ltd, London, GB; & JP-A-61 32 743 (SHOWA DENKO K.K.) 26-07-1984

## Beschreibung

Die Erfindung betrifft ein mehrschichtiges Kunststoffrohr mit mindestens einer Aussen- oder Innenwandschicht aus Polypropylen oder Polyethylen, und mit einer Zwischenschicht, die Polypropylen und Glasfaserteile enthält.

In der DE-A-2 542 423 ist ein Kunststoffkörper offenbart, der ein zweiphasiges Gemisch aus Glasfaserteilen und PVC enthält, bei dem eine erste Phase wiederverwendetes glasfaserverstärktes PVC und eine zweite Phase aus fremdkörperfreiem PVC vorhanden ist. Beim Verarbeiten wird die erste Phase derart weit aufgeschlossen, dass praktisch nur noch Einzelfasern im PVC eingebettet sind, die bei einer Weiterverarbeitung nicht zu einer gezielten radialen Versteifung insbesondere eines Rohres beitragen können. Im Kunststoffkörper nach der DE-A-2 542 423 ist Polyethylen nur als Verunreinigung vorhanden, welches Polyethylen nicht Glasfasern enthält, keine Verbundhaftung zwischen den einzelnen Partikeln bewirkt und insbesondere beim Extrudieren keine gewollten Verwirbelungen zu einem gesteuerten Ausrichten der Glasfasern erzeugt.

Die US-A-4,037,011 zeigt ein Verfahren, bei dem ein Granulat aus Kunststoff mit im wesentlichen parallel eingebetteten Glasfasern mit unverstärktem Kunststoff vermischt und nachfolgend extrudiert wird. Die Glasfasern sind weitgehend parallel ausgerichtet und insbesondere enthält das aus dem Verfahren hervorgehende Produkt keine Phase aus wiederverwendetem langglasfaserverstärktem Kunststoff, bei der insbesondere Langglasfaserbruchstücke in einer wirren, nicht mehrheitlich axial ausgerichteten Anordnung vorliegen, die zu irgendwelcher radialer Versteifung eines Rohres beitragen könnten.

Hier will die Erfindung Abhilfe schaffen. Die Erfindung, wie sie im Anspruch 1 gekennzeichnet ist, löst die Aufgabe, ein mehrschichtiges Kunststoffrohr mit einer Glasfasern enthaltenden Zwischenschicht zu schaffen, bei dem die Zwischenschicht einteilig ist und die Glasfasern in wirrer, nicht axial ausgerichteter Form angeordnet sind, wobei die Zwischenschicht teilweise aus wiederverwendeten langglasfaserverstärkten Polypropylenen gebildet ist.

Zur Herstellung des Kunststoffrohres werden zum Extrudieren unterschiedliche Materialien mit voneinander abweichender Schmelzviskosität verwendet, womit beim Extrudieren aufgrund der unterschiedlichen Fliessgeschwindigkeiten beim Aufeinandertreffen der verschiedenen Materialströme im Extrusionswerkzeug bei den Grenzzonen Turbulenzen entstehen. Dabei wird das Material mit der niedrigeren Schmelzviskosität stärker als das Material mit der höheren Schmelzviskosität verwirbelt. Das Material mit der niedrigeren Schmelzviskosität ist das die Glasfaserteile enthaltende, wiederverwendete Material, womit durch die stärkere Verwirbelung desselben der Parallelisierung der Glasfasern entgegengewirkt wird.

Die durch die Erfindung erreichten Vorteile sind im wesentlichen darin zu sehen, dass mit nur einer homogenen Zwischenschicht eine sowohl axiale als auch radiale Festigkeit des Kunststoffrohres mit einem geringen Anteil an Glasfasern erreicht ist. Noch entscheidender ins Gewicht fällt die Tatsache, dass zur Herstellung der Zwischenschicht ein Abfallprodukt aus der Kunststoffindustrie verwendet wird, dessen Entsorgung bis anhin verschiedene Aufwendungen gekostet hat.

Im folgenden wird die Erfindung anhand von lediglich einer einen Ausführungsweg darstellenden Zeichnung näher erläutert.

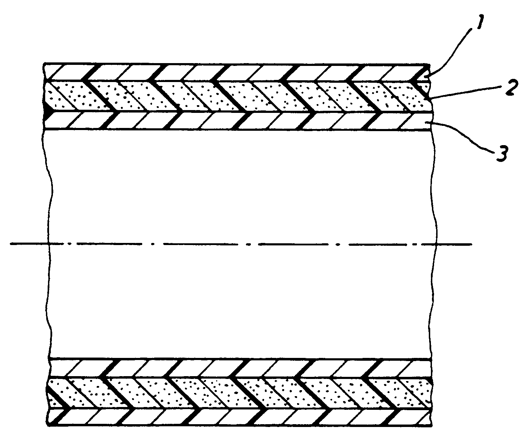

Die einzige Figur zeigt eine Schnittansicht eines mehrschichtigen Kunststoffrohrstückes.

In der Zeichnungsfigur bezeichnet die Bezugsziffer 1 die Aussenwandschicht, die Bezugsziffer 2 eine Zwischenschicht und die Bezugsziffer 3 die Innenwandschicht eines mehrschichtigen Kunststoffrohres. Bei dieser Ausführung besteht die Aussenwandschicht 1 aus Polyethylen und die Innenwandschicht 3 ebenfalls aus Polyethylen. Die Zwischenschicht 2 ist ein aus zwei Komponenten gebildetes Gemisch. Die eine Komponente ist Polyethylen und die andere Komponente enthält ein wiederaufbereitetes Abfallprodukt aus langglasfaserverstärktem Polypropylen.

Langglasfaserverstärktes Polypropylen fällt infolge seines Einsatzes für technisch anspruchsvolle Teile in der Automobil-Industrie vermehrt als Abfallprodukt an und musste bisher abgeführt, entsorgt werden, da seine Wiederverwertbarkeit nicht erkannt wurde. Die alleinige Verarbeitung der langglasfaserverstärkten Polypropylenabfälle ergab ein sehr hartes und steiles, aber für eine sinnvolle Verwendung viel zu sprödes Produkt. Diese Versprödung ist teilweise auf einen durch mehrfaches Verarbeiten (unter Wärmeeinwirkung) hervorgerufenen thermischen Abbau des Basismaterials zurückzuführen. Zur Bildung der oben angesprochenen zweiten Phase wird der Abfallstoff gemahlen und erhält so eine Zustandsform, die zur Wiederverwertung geeignet ist. Diesem gemahlenen Abfallstoff wird Polyethylen oder Polypropylen (beispielsweise auch Recycling-Material aus der Folienindustrie) zugegeben, so dass beim Extrudieren das beigemischte Polyethylen oder Polypropylen eine Verbundhaftung mit der Aussenwandschicht und Innenwandschicht des hergestellten Rohres eingeht.

Der Mengenanteil der Abfallphase, d.h. der Polypropylen und Glasfasern enthaltenden Phase lässt sich nun variieren, so dass gerade das Abfallprodukt zur Steuerung der insgesamten Eigenschaften des mehrschichtigen Kunststoffrohres herangezogen und ausgenützt wird. Bezogen auf das Gesamtvolumen des die Zwischenschicht ausmachenden Gemisches ist die Abfallphase im Bereich von 2 - 40, vorteilhaft 5 - 35 und a vorteilhaftesten 10 - 30 Volumen-% vorhanden. Mit der erfindungsgemässen Ausführung des mehrschichtigen Kunststoffrohres wird somit eine wesentliche Erhöhung vorwiegend der Rohrsteifigkeit mit einem geringeren Anteil an Verstärkungsfasern erreicht als üblicherweise notwendig. Soll das mehrschichtige Kunststoffrohr eher zäher bzw. elastischer sein, wird der genannte Mengenanteil der Abfallphase beim Bereich der unteren Grenzwerte der oben angegebenen Bereiche liegen. Soll hingegen das mehrschichtige Kunststoffrohr starrer oder steifer sein, wird ein Gewichtsanteil gewählt, der eher bei den oberen Grenzwerten liegt. Somit lassen sich mehrschichtige Kunststoffrohre für die verschiedensten Anwendungen herstellen, wobei die jeweils notwendigen technischen Eigenschaften durch die anteilsmässige Wahl des Abfallproduktes festgelegt werden können. Dazu muss auch bemerkt werden, dass die relativen Dicken der drei Schichten ebenfalls, je nach Anwendungszweck, gewählt werden können, so dass beispielsweise die Aussenschicht 1 relativ dünn und die Zwischenschicht 2 und die Innenwandschicht 3 relativ dick sind. Die in den gemahlenen Polypropylenteilchen enthaltenen Glasfaseranteile sind als kleine Stücke einer im ursprünglichen Produkt enthaltenen aus Endlosfasern bestehenden Glasmatte zu betrachten. Diese Glasmatten-Partikel weisen ein wirres Gefüge von Glasfasern auf, die eine Länge von einigen 1/10 mm bis zu einigen mm aufweisen können. Werden glasfaserverstärkte Kunststoffe in bekannter Weise im Spritzguss- oder Extrusionsverfahren verarbeitet, weisen diese in handelsübliche Kunststoffe (Granulate) eingearbeitete Glasfasern nur eine Länge von einigen »m bis wenige 1/10 mm auf. Dabei haben die Glasfasern die sehr nachteilige Tendenz, sich in Verarbeitungsrichtung, d.h. vor allem bei der Extrusion axial auszurichten, so dass in radialer Richtung kein oder ein nur beschränkter Verstärkungseffekt erreicht wird. Dies hat zur Folge, dass die Verstärkungswirkung vor allem in axialer Richtung und weniger insbesondere bei Rohren erwünschter radialer Richtung erfolgt. Diesem Nachteil wirken nun die im vorliegenden Material vorhandenen, vorstehend bereits beschriebenen, kleinen Glasmattenstücke entgegen. Diese untereinander z.T. noch verbundenen und ineinander verhakten Glasfasern können sich beim Extrusionsprozess nicht im gleichen Masse axial ausrichten. Dies führt nun dazu, dass selbst bei einem über die Gesamtwanddicke eines Rohres betrachtet recht geringen Anteil an verstärkend wirkenden Glasfasern bereits eine recht beträchtliche versteifende Wirkung in radialer Richtung im Mehrschichtrohr erzielt wird.

Erfindungsgemäss ist erkannt worden, dass Polyethylen, aber auch das Polypropylen in den gemahlenen Teilchen gegenüber anderen für die Extrusion verwendeten Polypropylen-Typen derart unterschiedliche Schmelzviskositäten aufweisen, dass der eine Stoff insbesondere beim Extrudieren stärker verwirbelt als der andere Stoff, und dass diese Tatsache der Parallelisierung der Fasern entgegenwirkt.

Eine beispielsweise Anwendung eines relativ steifen mehrschichtigen Kunststoffrohres, das also eine relativ hohe Steifigkeit des Rohrquerschnittes aufweist, ist ein Schutzrohr für erdverlegte Elektro- oder Uebermittlungskabel.

Nach Anwendungszweck lässt sich das Material der Aussenwandschicht 1 und Innenwandschicht 3 wählen. Beide dieser Schichten 1 und 3 können aus Polyethylen bestehen, bei anderen Anwendungen aus Polypropylen. Weitere Ausführungen sehen eine Aussenwandschicht 1 aus Polypropylen und eine Innenwandschicht 3 aus Polyethylen und weitere eine Aussenwandschicht 1 aus Polyethylen und eine Innenwandschicht 3 aus Polypropylen vor. In jedem Falle enthält jedoch die Zwischenschicht wiederverwertetes glasfaserverstärktes Polypropylen.

Weiter kann die Innenwandschicht 3 einen Zusatzstoff enthalten, der einen höheren Reibungswiderstand ihrer Oberfläche bewirkt. Damit kann der sogenannten Kabelwanderung entgegengewirkt werden, bei welcher in den Schutzrohren verlegte elektrische Kabel durch Vibrationen und Erschütterungen z.B. durch den Schwerverkehr auf den verhältnismässig ebenflächigen Rohrwandungen gleiten mit der Folge, dass bei Kabelverankerungen oder Kabelspleissungen erhöhte Kräfte auftreten, die zu Schäden führen würden. Umgekehrt kann die Innenwandschicht mit einem den angesprochenen Reibungswiderstand vermindernden Zusatzstoff ausgerüstet sein. Dieser führt zu einer Verringerung von Zugkräften beim Einzug von langen und schweren Kabeln in Kabelschutzrohre.

Bei einerweiteren Ausführung ist die Aussenwandschicht 1 in hellen bis weissen Farbtönen gehalten. Dieses ergibt eine beträchtliche Lichtreflexion und geringere Wärmeabsorption, wobei der Wärmeeinfluss unter beispielsweise Sonneneinstrahlung derart kleiner sein kann, dass eine 50% geringere Ausdehnung erzielt werden kann und damit offensichtlich weisen solche Rohre bzw. Rohrstücke aufgrund der geringeren Erwärmung und der geringeren Ausdehnung während Verlegearbeiten eine höhere Formbeständigkeit und eine erhöhte Funktionssicherheit bezüglich des Ausschlüpfens der Rohrenden aus den häufig verwendeten Steckmuffen auf.

Die Aussenwandschicht 1 kann auch so geformt sein, dass unter einem äussersten hellen bzw. weissen Schichtabschnitt ein Russ enthaltender Schichtabschnitt vorgesehen ist, welcher UV-Einwirkungen und folglicher Versprödung entgegenwirkt. Damit wird erreicht, dass die mechanischen bzw. physikalischen Eigenschaften des insgesamten Rohres weitgehend erhalten bleiben können, obwohl die helle bis weisse Aussenschicht nicht die gleich hohe UV-Lichtbeständigkeit aufweist wie der Russ enthaltende Schichtteil, so dass auch bei einer teilweisen Versprödung des äussersten Schichtbereiches die mechanischen Festigkeitseigenschaften des Kunststoffrohres erhalten bleiben, beispielsweise im Falle, wenn ein Kunststoffrohr nur temporär der Sonneneinstrahlung ausgesetzt gelagert wird und nachher als erdverlegtes Kabelschutzrohr Verwendung findet.

Die Innenwandschicht 3 kann bei einerweiteren Ausführung ebenfalls in hellen bis weissen Farbtönen ausgeführt sein. Diese Ausführung schafft bessere Bedingungen für innere Kontrollarbeiten z.B. Ausleuchten, Kontrollen mittels Fernsehkameras im Vergleich mit lediglich schwarz eingefärbten Innenwandschichten 3.

Bei einer weiteren Ausführungsvariante besteht die Aussenschicht 1 aus Polypropylen oder Polyethylen einschliesslich einem flammhemmenden Zusatzstoff und die Innenwandschicht 3 aus Polyethylen. Bei einer Ausführung, bei welcher die Aussenwandschicht 1 UV-beständig und die Innenwandschicht korrosionsfest sein soll, enthält die Aussenschicht 1 Polyethylen und die Innenwandschicht 3 Polypropylen.

Folglich sind viele Varianten des mehrschichtigen Kunststoffrohres möglich, wobei nicht nur eine Wiederverwertung von Abfallstoff erreicht ist, sondern gerade der Abfallstoff als Eigenschaften bestimmende Komponente des mehrschichtigen Kunststoffrohres benützt wird.

## Patentansprüche

1. Mehrschichtiges Kunststoffrohr mit mindestens einer Aussen- (1) oder Innenwandschicht (3) aus Polypropylen oder Polyethylen, und mit einer Zwischenschicht (2), die Polypropylen und Glasfaserteile enthält, dadurch gekennzeichnet, dass die Zwischenschicht ein Gemisch aus Polyethylen, Polypropylen und Glasfaserteile enthält, wobei dieses Gemisch eine erste Phase mit einer vorgegebenen Menge Polypropylen und Glasfaserteile und eine zweite Phase mit einer vorgegebenen Menge Polyethylen oder Polypropylen enthält, wobei der Mengenanteil der ersten Phase 2-40, vorteilhaft 5-35 und am vorteilhaftesten 10-30 Volumen-% des Gesamtvolumens der Zwischenschicht beträgt, wobei die Menge Polypropylen und Glasfaserteile als wiederverwendetes langglasfaserverstärktes Polypropylen vorliegt, welches in Form von gemahlenen Partikeln vorliegt, in denen Langglasfaserbruchstücke in einer wirren, nicht mehrheitlich axial ausgerichteten Anordnung vorhanden sind, welche Partikel in Polyethylen oder Polypropylen eingebettet sind, welche Stoffe die Verbundhaftung zwischen den Partikeln selbst und zwischen den Partikeln und der Aussen- (1) bzw. Innenwandschicht (3) bewirken, und welche wirre, auch nach einer Extrusion beibehaltene Anordnung der Langglasfaserbruchstücke wesentlich zur radialen Versteifung des Rohres beiträgt.

2. Kunststoffrohr nach Anspruch 1, dadurch gekennzeichnet, dass die Aussenwandschicht (1) Polypropylen mit einem flammhemmenden Zusatzstoff und die Innenwandschicht (3) Polyethylen enthalten.

3. Kunststoffrohr nach Anspruch 1, dadurch gekennzeichnet, dass die Aussenwandschicht (1) Polyethylen und die Innenwandschicht (3) Polypropylen enthalten.

4. Kunststoffrohr nach Anspruch 1, dadurch gekennzeichnet, dass die Innenwandschicht (3) einen ihren Reibungskoeffizienten senkenden Zusatzstoff enthält.

5. Kunststoffrohr nach Anspruch 1, dadurch gekennzeichnet, dass die Innenwandschicht (3) einen ihren Reibungskoeffizienten erhöhenden Zusatzstoff enthält.

6. Kunststoffrohr nach Anspruch 1, dadurch gekennzeichnet, dass die Aussenwandschicht (1) hell bis weiss gefärbt ist.

7. Kunststoffrohr nach Anspruch 6, dadurch gekennzeichnet, dass die Aussenwandschicht (1) einen von der Wandaussenfläche entfernt angeordneten Bereich aufweist, der mit der UV- Wirkung und Versprödung entgegenwirkenden Russ ausgerüstet ist.

8. Kunststoffrohr nach Anspruch 1, dadurch gekennzeichnet, dass die Innenwandschicht (3) hell bis weiss gefärbt ist.

9. Verfahren zur Herstellung des Kunststoffrohres nach Anspruch 1, dadurch gekennzeichnet, dass zum Extrudieren unterschiedliche Materialien mit voneinander abweichender Schmelzviskosität verwendet werden, so dass die verschiedenen Materialströme in den Fliesskanälen des Extrusionswerkzeugs unterschiedliche Fliessgeschwindigkeiten aufweisen und beim Zusammentreffen derselben bei den Grenzzonen Turbulenzen entstehen, wobei das Material mit der niedrigen Schmelzviskosität stärker als das andere Material verwirbelt wird, welches Material mit der niedrigeren Schmelzviskosität das die Glasfaserteile enthaltende, wiederverwendete Material ist, welches durch die stärkere Verwirbelung der Parallelisierung der Glasfasern entgegenwirkt.

## Claims

1. Multilayer plastic pipe having at least one outer (1) or inner wall layer (3) of polypropylene or polyethylene, and an intermediate layer (2) which contains polypropylene and glass fibre particles, characterized in that the intermediate layer comprises a mixture of polyethylene, polypropylene and glass fibre particles, which mixture includes a first phase of a predetermined amount of polypropylene and glass fibre particles and a second phase of a predetermined amount of polyethylene or polypropylene, whereby the amount of the first phase amounts to 2 - 40, preferably 5 - 35 and most preferably 10 - 30 percent by volume of the total volume of the intermediate layer, whereby the amount of polypropylene and glass fibre particles is present as recycled polypropylene reinforced by long glass fibres which is present in the form of ground particles in which the broken parts of the long glass fibres are present in an entangled, not substantially axially oriented state, which particles are embedded in polyethylene or polypropylene, which materials cause the adherence between the particles themselves and between the particles and the outer (1) and inner wall layer (3), respectively, and which entangled orientation of the broken parts of the long glass fibres maintained after the extrusion contribute substantially to the radial stiffening of the pipe.

2. Plastic pipe according to claim 1, characterized in that the outer wall layer (1) comprises polypropylene with a flame-retarding additive and the inner wall layer (3) comprises polyethylene.

3. Plastic pipe according to claim 1, characterized in that the outer wall layer (1) comprises polyethylene and the inner wall layer (3) comprises polypropylene.

4. Plastic pipe according to claim 1, characterized in that the inner wall layer (3) comprises an additive which lowers its coefficient of friction.

5. Plastic pipe according to claim 1, characterized in that the inner wall layer (3) comprises an additive which increases its coefficient of friction.

6. Plastic pipe according to claim 1, characterized in that the outer wall layer (1) is coloured brightly up to white.

7. Plastic pipe according to claim 6, characterized in that the outer wall layer (1) comprises an area remote from the outer surface of the wall which includes soot counteracting UV-influences and embrittlement.

8. Plastic pipe according to claim 1, characterized in that the inner wall layer (3) is coloured brightly up to white.

9. Method of producing the plastic pipe according to claim 1, characterized in that various materials of differing viscosity of their melt are used for extrusion, such that the various material flows in the flow channels of the extrusion tool have various flow speeds and that turbulences are produced at their border zones when these flows meet, whereby the material having the low viscosity of the melt is whirled more strongly than the other material, which material of the lower viscosity of the melt is the recycled material comprising the glass fibre particles, which material, due to the stronger whirling thereof, counteracts the parallelizing of the glass fibres.

## Revendications

1. Tube de matière synthétique à couches multiples comprenant au moins une couche de paroi extérieure (1) ou une couche de paroi intérieure (3) en polypropylène ou en polyéthylène, et une couche intermédiaire (2), qui contient du polypropylène et des morceaux de fibres de verre, caractérisé en ce que la couche intermédiaire contient un mélange de polyéthylène, de polypropylène et de morceaux de fibres de verre, ce mélange présentant une première phase avec une quantité prédéterminée de polypropylène et de morceaux de fibres de verre et une seconde phase avec une quantité prédéterminée de polyéthylène ou de polypropylène, la proportion de la première phase étant de 2 à 40 %, de préférence 5 à 35 % et le plus avantageusement de 10 à 30 % en volume du volume total de la couche intermédiaire, la quantité de polypropylène et de morceaux de fibres de verre étant présente sous forme de polypropylène réutilisé renforcé par de longues fibres de verre et se présentant sous forme de particules broyées dans lesquelles des fragments de longues fibres de verre présentent un agencement désordonné et ne sont pas orientés majoritairement en direction axiale, les particules étant noyées dans du polyéthylène ou du polypropylène, ces matériaux produisant l'adhésion de liaison entre les particules ainsi qu'entre celles-ci et la couche de paroi extérieure (1), respectivement la couche de paroi intérieure (3), cet agencement désordonné des fragments de fibres de verre, maintenu même après une extrusion, contribuant sensiblement au renforcement radial du tube.

2. Tube de matière synthétique suivant la revendication 1, caractérisé en ce que la couche de paroi extérieure (1) contient du polypropylène avec un additif retardateur de combustion et en ce que la couche de paroi intérieure (3) contient du polyéthylène.

3. Tube de matière synthétique suivant la revendication 1, caractérisé en ce que la couche de paroi extérieure (1) contient du polyéthylène et en ce que la couche de paroi intérieure (3) contient du polypropylène.

4. Tube de matière synthétique suivant la revendication 1, caractérisé en ce que la couche de paroi intérieure (3) contient un additif qui diminue son coefficient de frottement.

5. Tube de matière synthétique suivant la revendication 1, caractérisé en ce que la couche de paroi intérieure (3) contient un additif qui augmente son coefficient de frottement.

6. Tube de matière synthétique suivant la revendication 1, caractérisé en ce que la couche de paroi extérieure (1) est de teinte claire à blanche.

7. Tube de matière synthétique suivant la revendication 6, caractérisé en ce que la couche de paroi extérieure (1) présente une zone agencée à distance de la surface externe de paroi et comportant du noir de fumée qui s'oppose à l'action des UV et à la fragilisation.

8. Tube de matière synthétique suivant la revendication 1, caractérisé en ce que la couche de paroi intérieure (3) est de teinte claire à blanche.

9. Procédé de préparation du tube de matière synthétique suivant la revendication 1, caractérisé en ce qu'on utilise pour l'extrusion des matières différentes ayant des viscosités de fusion mutuellement différentes, de façon que les courants de matière différents présentent dans les canaux d'écoulement de l'outil d'extrusion des vitesses d'écoulement différentes et qu'il se produise des turbulences lors de la rencontre de ces courants aux zones limites, la matière ayant la viscosité de fusion basse étant plus fortement entrainée en tourbillon que l'autre matière, la matière ayant la viscosité de fusion plus basse étant la matière réutilisée qui contient les morceaux de fibres de verre et qui, par des tourbillons plus violents, s'oppose à la mise en parallèle des fibres de verre.
